# EUROPEAN PATENT SPECIFICATION

(11) **EP 0 856 841 B1**
(45) Date of publication and mention of the grant of the patent: **29.12.2004**
(21) Application number: 98870011.8
(22) Date of filing: 21.01.1998
(51) Int. Cl.: G11B 15/68

(54) **Device for ensuring the gripping transfer of cases, cartridges, cassettes**
Gerät zur Sicherstellung des Greifens und der Übertragung von Gehäusern, Patronen und Kassetten
Equipement qui assure la préhension, le transfert de cases, cartouches, cassettes

(30) Priority: 30.01.1997 BE 9700088
(43) Date of publication of application: 05.08.1998
(73) Proprietor: STAAR SOCIETE ANONYME, B-1200 Bruxelles (BE)
(72) Inventor: d'Alayer de Costemore d'Arc, Stéphane Marie André, 1474 Ways (BE); Sisopha, Veosamouth, WangTongLang, Bangkrapi, Bangkok 10310 (TH)
(74) Representative: Overath, Philippe

(56) References cited:
- EP-A- 0 623 925
- FR-A- 2 366 661
- PATENT ABSTRACTS OF JAPAN vol. 013, no. 508 (P-960), 15 November 1989 & JP 01 205755 A (FURUNO ELECTRIC CO LTD), 18 August 1989,
- PATENT ABSTRACTS OF JAPAN vol. 014, no. 303 (P-1070), 29 June 1990 & JP 02 096965 A (SANKYO SEIKI MFG CO LTD), 9 April 1990,

## Description

The present invention relates to automated storage units for cassettes, cases, cartridges,... and more particularly concerns a device ensuring the gripping of a cassette in its storage position then its transfer to a position where it is either loaded in a playback/recording apparatus within the unit or delivered outside said unit to a user.

Numerous devices of this type have been proposed in the past but they are complex, bulky and expensive as requiring either mechanical means in each storage compartment, as described in the EP-P 0 227446, EP-A 0407305 or FR 2 366 661, to release the selected cassette and translate it so that it engages the transfer device, or a specific gripping device as described in PCT-WO 91/06100 or Japanese Patent 1-205755 which is independent from and thus has to be specifically added to the transfer device.

A gripping and transfer device is disclosed in EP-A-0 623925 but it is bulky and limited to a single column of cassettes which can be translated only through the front edge of said device.

The aim of the present invention is to overcome those drawbacks by providing a single device ensuring both the gripping and the transfer of cassettes, thus avoiding the need of a mechanism in each storage compartment or a specific gripping mechanism.

Another aim of the invention is to provide a device allowing transfer of the cassette through both its front and back sides.

A further aim of the invention is to provide cassette storage compartments of a very simple shape.

A further aim of the invention is to provide a device made of a few number of parts so that it is of a low manufacturing cost and highly reliable.

A further aim of the invention is to provide a device allowing storage of a large number of cassettes within a prescribed volume while ensuring a short access time.

Numerous characteristics, advantages, features of the invention will appear from the following description of two preferred embodiments to which various modifications can be made without departing from the scope of the invention and in which :
- Fig. 1 is a top view of a first embodiment of the device of the invention,
- Fig. 2 is a bottom view of the device shown on Fig. 1, gripping a cassette in storage position,
- Fig. 3 is similar to Fig. 2, the device being in a non-gripping position,
- Fig. 4 is a lateral view, at a larger scale, of the device shown in Figs. 1 and 2, along the section A-A of Fig. 1 and without cassette,
- Fig. 5 is a schematic front view of an automatic unit incorporating the device of Figs. 1 to 4 without the front panel,
- Fig. 6 is a partial lateral section view of the device shown on Fig. 5 along plane B-B,
- Fig. 7 is similar to Fig. 3 but represents a second embodiment,
- Fig. 8 shows schematically the construction of a unit incorporating the embodiment of Fig. 7.

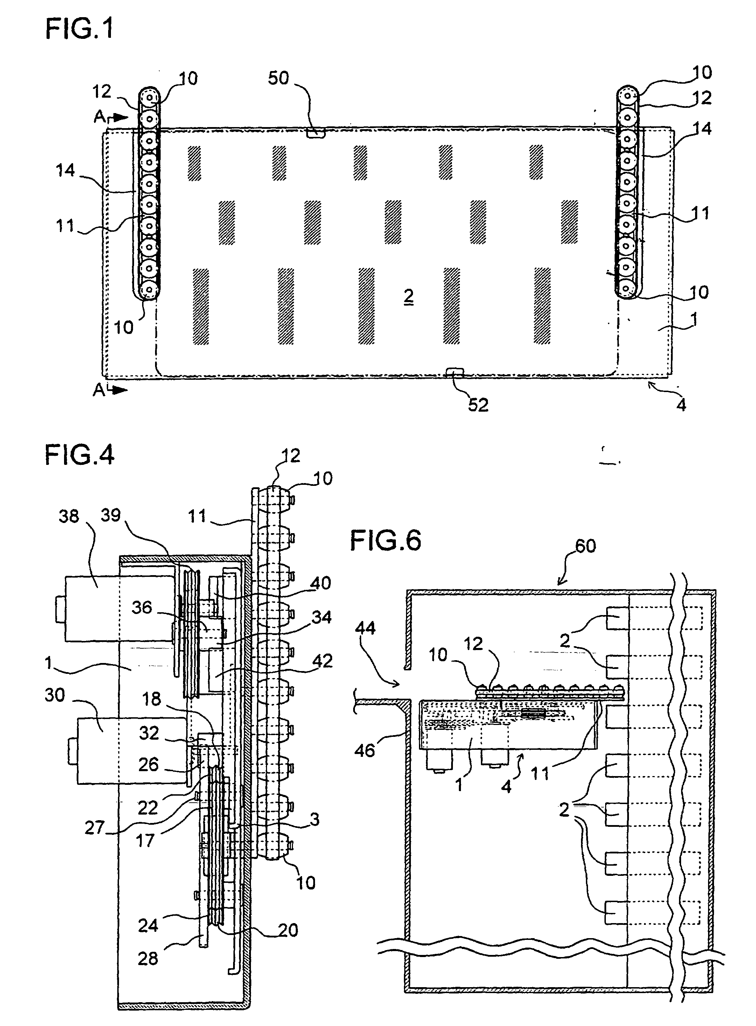

As shown on Figs. 5 and 6, the device 4 of the invention is incorporated in an automatic unit 60 comprising several columns of cassette storage compartments 61 and a column of cassette players 62 to ensure the transfer of cassettes 2 between storage and delivery positions where they are either delivered to the user through an opening 44 or inserted in a player 62. To achieve this, the device 4 (Figs. 1 to 4 and 7, 8) is movable along perpendicular axis X and Y in a conventional way, thus just shown diagrammatically on Fig. 5 but not described.

According to the invention, the storage compartments which are of a parallelepipedic profile to get a very low manufacturing cost have a depth smaller than that of the cassettes so that the front edge of each stored cassette 2 facing the frame 1 has an overhang (Fig. 6). This spacing arrangement allows an easy manual insertion or removal of cassettes in/from storage compartments without using the transfer device to save time when cassettes must be manipulated for updating the content of the storage unit 60 and the storage of a large number of cassettes.

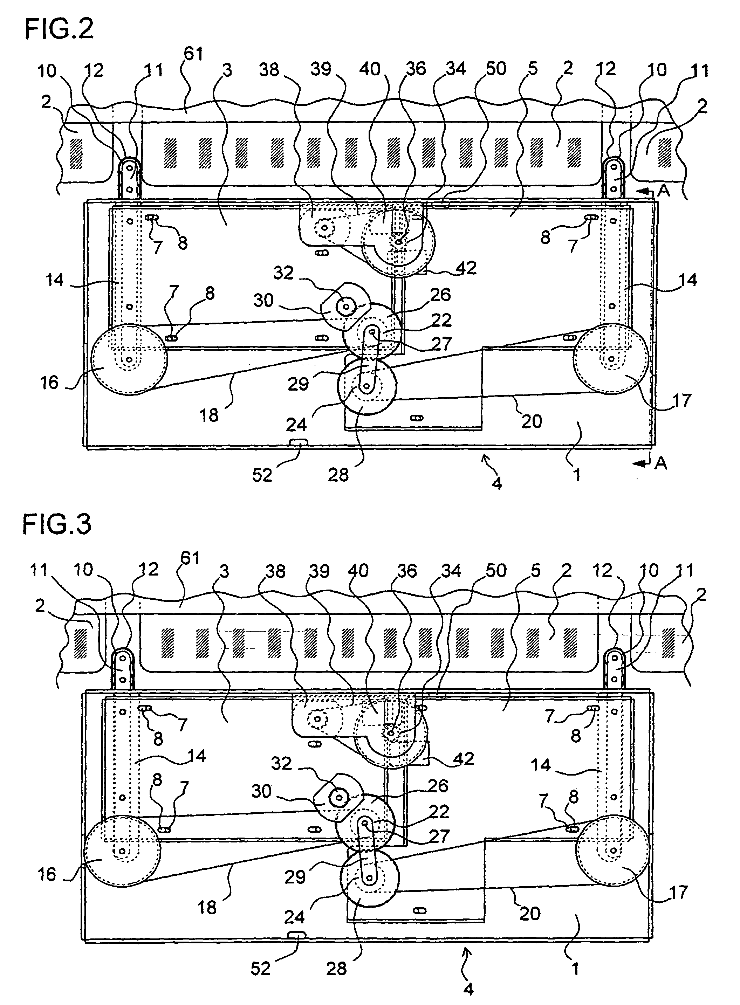

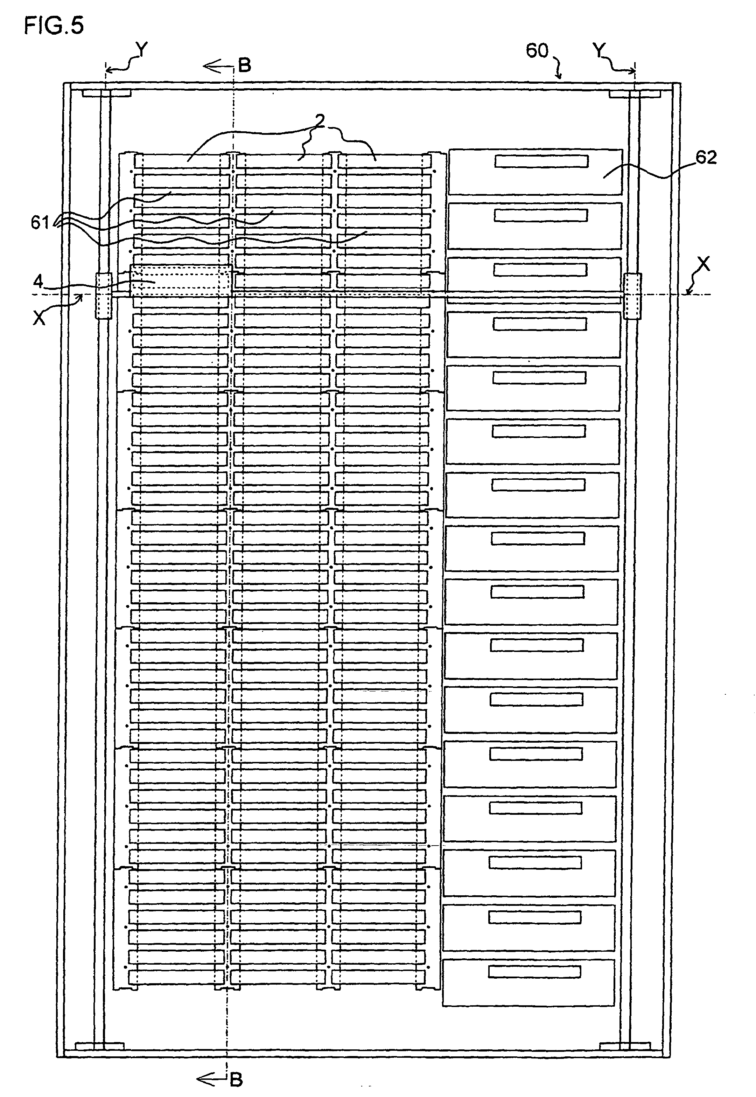

The device 4 of the invention (Figs. 2, 3) mainly comprises a frame 1 of a size slightly larger than that of the cassette 2 that it handles and bears on its lower face two support plates 3, 5 both mobile with respect to the frame 1 through the combination of shafts 7 mounted on the frame 1 and slots 8 provided in said plates. Each support plate 3, 5 bears gripping, transfer means (11) such as a longitudinal arm supporting an array of rollers 10 (Figs. 1, 4), preferably having a cumbered profile and guiding a peripheral rubber belt 12. The arms 11 are parallel to each other and perpendicular to the front edge of the frame 1 with one end protruding said front edge to form an overhang while the other end extends to the middle part of said frame 1. Two oblong apertures 14 in the frame 1 let each arm 11, its rollers 10 and belt 12 protrude through said frame and move laterally. In accordance with the invention, the overhang of the arms 11 facing the cassettes 2 in storage position is slightly shorter than the overhang of the cassettes 2 from their storage compartments 61.

The roller 10 at the extremity of each arm 11 located inside the frame 1 is fixed to the shaft of a pulley 16, resp. 17 (Fig. 3) connected by a belt 18, 20 to a driving pulley 22, 24 coaxially mounted on a gear 26, 28. A shaft 27 riveted to the support plate 3 supports the gear 26 and one end of an arm 29 which can rotate by about 30° around said shaft, the other end of said arm supporting a shaft around which the gear 28 can rotate. As a result, the gears 26 and 28 always mesh even during a relative lateral movement of the support plates 3, 5 (Fig. 5). The support plate 3 bears a micromotor 30 having on its output shaft a gear 32 driving the gear 26; accordingly, the rotation of the micromotor 30 in any direction drives the gears 26, 28 in opposite directions and accordingly the rollers 10 of each arm 11 and more particularly the belts 12 always in opposite directions.

A motor 38 mounted on the frame 1 and driving through a belt 39 a pulley coaxially mounted on a shaft 36 and integral with a gear 34 powers the relative movement of the support plates 3, 5 by engaging their respective racks 40, 42. Thus, the motor 38 moves the support plates 3, 5 either apart or towards each other.

In inoperative position, all the above-described elements are in the position shown on Fig. 3 in which the arms 11 are spaced apart to clear the edges of the cassettes. The space between stored adjacent cassettes 2, both in vertical and horizontal directions (Figs. 3, 6) is slightly larger than the height of the rollers 10, respectively the width of the path of the belt 12 so that the overhang of the arms 11 moves freely inbetween stored adjacent cassettes 2 to reach the selected cassette. Thanks to this design, the frame 1 and the arms 11 can immediately move horizontally from one column to another one (Fig. 6) or vertically from one row to another one, thus ensuring a short access time to grip a selected cassette 2.

When the device 4 is located in front of a selected cassette 2 (Fig. 3) with the arms 11 facing the lateral edges of the cassette, first the motor 38 is powered to move the support plates 3, 5 towards each other to grip the cassette by pressing both belts 12 against the front part of the lateral edges of the cassette 2. Then, the motor 30 is powered anti-clockwise, as a result, the pulleys 16, 17 rotate clockwise, anti-clockwise and both rubber belts 12 translate the cassette 2 towards the frame 1. After the cassette is positioned on the frame 1 (Fig. 1), the motor 30 is switched off by the opto-detector 52 actuated by the cassette 2 and the motor 38 temporarily powered to move the arms 11 apart to let the arms and the frame 1 move freely horizontally and vertically inbetween stored cassettes 2 for reaching the opening 44 provided in the front panel 46 of the unit (Fig. 6) or the slot of a player 62 (Fig. 5).

Should the cassette 2 be delivered through the opening 44 (Fig. 6), then the motor 38 is actuated so that the arms 11 grip the cassette while the motor 30 drives the pulley 17 and the belt 12 clockwise, the pulley 16 and the belt 12 anti-clockwise to translate the cassette outside the unit. After the cassette has reached the first roller 10 and thus protrudes through the opening 44, a timer switch powers off the motor 30 while temporarily powering the motor 38 to set the arms 11 apart to let the user remove the cassette.

Should the cassette 2 be loaded in a player 62, the pulley 17 drives the belt 12 anti-clockwise, the pulley 16 the belt 12 clockwise so that the cassette is inserted into the slot of a player 62 for automatic loading to play position. After the cassette 2 has cleared the opto-detector 50, the arms 11 are set apart by the motor 38.

When the user wishes to return a cassette to its storage position, he simply inserts it through the opening 44 in front of which the frame 1 has been positioned. The opto-detector 52 actuated by the cassette 2, ensures after the lapse of a time delay the powering of the motor 38 to let the arms 11 grip the cassette. As can be appreciated from Fig. 1, the length of the arms 11 is such that the user needs only to insert a cassette by just a third of its depth to ensure its gripping. The motor 30 is then switched on and the cassette translated until it reaches the position shown on Fig. 1 where the opto-detector 50 switches off said motor while powering the motor 38 to space the arms 11 apart to let them and the frame 1 move freely inbetween stored cassettes to bring the cassette 2 in front of a storage compartment. Then, the motor 38 is powered so that the arms 11 grip the cassette while the motor 30 is switched on so that the belts 12 translate the cassette 2 until it reaches the back end of the storage compartment (Fig. 2) and clears the opto-detector 52; then the motor 30 is switched off while the motor 38 is powered on to move the support plates 3, 5 apart to release the cassette in its storage compartment. The device 4 is then ready for selecting or storing another cassette as the arms 11 can move freely inbetween stored adjacent cassettes.

When a cassette ejected from a player 62 has to be returned to a storage position, the frame 1 is first positioned in front of said player, the motor 38 is powered to let the arms 11 grip the cassette, then the motor 30 is powered so that the belts 12 translate the cassette on the frame 1 until the opto-detector 52 is actuated.

Then, the same sequence, as described here-above, to move the frame 1 and store the cassette is powered.

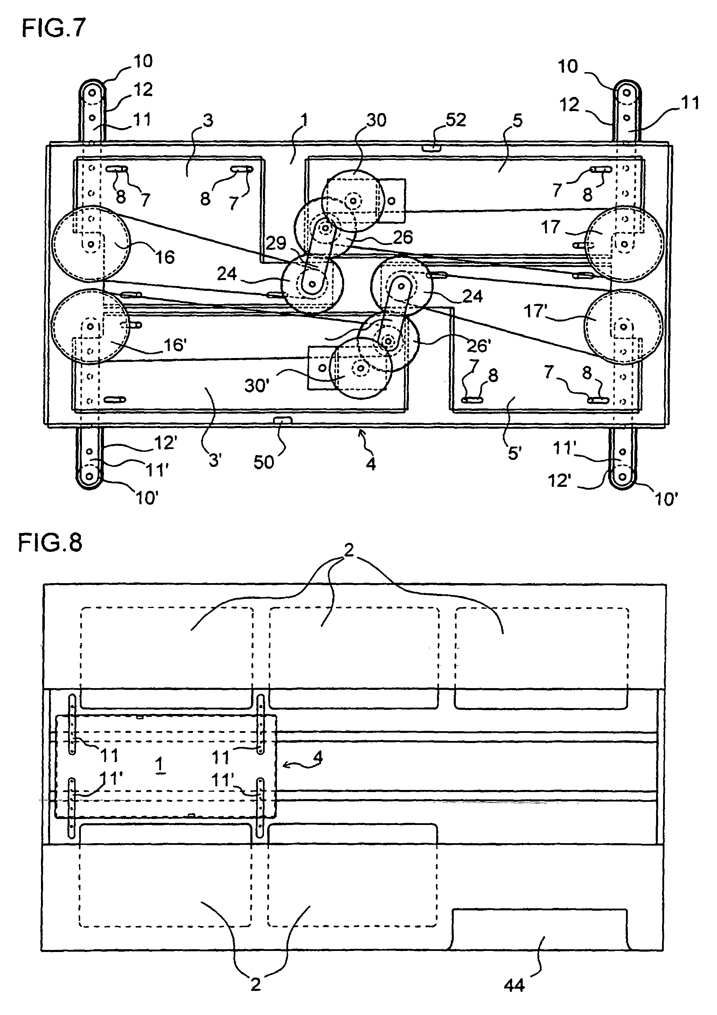

In another embodiment, shown on Fig. 7, the frame 1 is equipped with two pairs of arms 11, one at front edge, the other at its back edge, so cassettes can be stored in two sets of columns, one facing the front edge (Figs. 1 to 6), the other the back edge where the opening 44 is (Fig. 8). The pairs of arms 11 operate as here-above described, either separately or in tandem to accommodate the distance that the cassette 2 has to travel. For instance, to deliver to the user a cassette 2 stored in the front edge, the support plates 3, 5 are moved towards each other to grip the cassette and the belts 12 actuated to translate the cassette on the frame 1. Then, the support plates 3, 5 are moved apart, the frame 1 brought in front of the opening 44 and the support plates 3', 5' moved towards each other so that the belts 12', actuated by the motor 30' through the gears, pulleys 24', 26'; 16', 17' translate the cassette through the opening 44.

As one can understand, this device 4 ensuring the gripping and transfer of cassettes is simple, compact and inexpensive. Thus the frame 1 is light, works-out simple means to displace it and the access time is short because of the low inertia.

As shown on Figs. 1 to 4, it is advantageous to set on the arms 11 arrays of identical rollers 10 because they accurately center cassettes, even tilted in storage compartments and prevent cassettes to be set askew during translation.

As one can understand, the relative movement of the support plates 3, 5 allows them to grip cassettes 2 even when stored in protecting envelopes, boxes, or card boards as it accommodates a variation in width of about 6 mms. Further, said device 4 can be easily modified to handle boxes such as for CD, DVD or CD-Rom discs.
- 1: frame
- 2: cassette
- 3, 5: support plate
- 4: device
- 7: shaft
- 8: slot
- 10: rollers
- 11: arm
- 12, 12': rubber belt or band
- 14: aperture
- 16, 17, 16' 17': pulleys
- 18, 20: belts
- 22, 24: pulleys
- 26, 28: gears
- 27: shaft
- 29: arm
- 30, 30': micromotor
- 32: gears
- 34: gears
- 36: shaft
- 38: motor
- 39: belt
- 40, 42: rack
- 44: opening
- 46: front panel
- 50, 52: opto-detector
- 60: unit
- 61: cassette storage compartment
- 62: player

## Claims

1. Device for gripping and transferring cassettes (2) between storage and delivery positions, comprising a movable frame (1) with front and back edges, said movable frame being associated to lateral means (11) mobile with respect to said frame, said means (11) bearing a belt (12) and consisting of longitudinal arms perpendicular to the front edge of the frame (1) and movable with respect to each other to engage the lateral edges of a cassette (2) to grip and transfer it, each means (11) protruding said frame (1),
**characterised in that** the means (11) extend to the middle part of said frame (1) to transfer a cassette through the front edge and/or the back edge of the flame (1) having a size slightly larger than that of cassettes (2).

2. Device according to claim 1, **characterized in that** said arms (11) are parallel to each other and support arrays of identical rollers (10).

3. Device according to any of the preceding claims, **characterized in that** said arms (11) are mounted on support plates (3, 5) movable with respect to the frame (I), said support plates bearing racks (40, 42) engaged by a gear (34), the rotation of which moves the support plates (3, 5) apart or towards each other.

4. Device according to any of the preceding claims, **characterized in that** each arm (11) bears at least a roller (10) driven by a motor (30) associated to a pulley (32, 22, 16; 24, 17) and gears (26, 28) mounted on a pivotable arm (29) to stay in mesh while the arms (11) move with respect to each other.

5. Device according to any of the preceding claims, **characterized in that** it includes two pairs of arms (11), one pair located at the front edge, the other at the back edge, said arms (11) being powered either separately or in tandem.

## Patentansprüche

1. Vorrichtung zum Ergreifen und Übergeben von Kassetten (2) zwischen Aufbewahrungs- und Auslieferungspositionen, umfassend einen bewegbaren Rahmen (1) mit vorderen und hinteren Ränder,
wobei dem bewegbaren Rahmen seitliche Mittel (11) zugeordnet sind, welche in Bezug auf den Rahmen beweglich sind, wobei die Mittel (11) einen Riemen (12) tragen und aus Längsarmen gebildet sind, die senkrecht zur vorderen Rand des Rahmens (1) verlaufen und relativ zueinander bewegbar sind, um zum Ergreifen und Übergeben einer Kassette (2) die seitlichen Kanten derselben in Eingriff zu nehmen, und
wobei jedes Mittel (11) von dem Rahmen (1) hervorsteht,
**dadurch gekennzeichnet, dass** sich die Mittel (11) zum mittleren Abschnitt des Rahmens (1) erstrecken, um eine Kassette durch den vorderen Rand oder/und den hinteren Rand des Rahmens (1) hindurch zu übergeben, wobei der Rahmen (1) eine etwas größere Größe aufweist als die von Kassetten (2).

2. Vorrichtung nach Anspruch 1, **dadurch gekennzeichnet, dass** die Arme (11) zueinander parallel sind und Anordnungen von identischen Rollen (10) tragen.

3. Vorrichtung nach einem der vorhergehenden Ansprüche, **dadurch gekennzeichnet, dass** die Arme (11) an Trägerplatten (3, 5) angebracht sind, welche bezüglich des Rahmens (1) bewegbar sind, wobei die Trägerplatten Zahnstangen (40, 42) tragen, welche mit einem Zahnrad (34) kämmen, dessen Drehung die Trägerplatten (3, 5) voneinander weg oder aufeinander zu bewegt.

4. Vorrichtung nach einem der vorhergehenden Ansprüche, **dadurch gekennzeichnet, dass** jeder Arm (11) wenigstens eine Rolle (10) trägt, welche durch einen einer Riemenscheibe (32, 22, 16; 24, 17) zugeordneten Motor (30) angetrieben wird, sowie Zahnräder (26, 28) trägt, die an einem schwenkbaren Arm (29) angebracht sind, um in Eingriff zu bleiben, wenn sich die Arme (11) relativ zu einander bewegen.

5. Vorrichtung nach einem der vorhergehenden Ansprüche, **dadurch gekennzeichnet, dass** sie zwei Paare von Armen (11) aufweist, wobei ein Paar am vorderen Rand und das andere am hinteren Rand angeordnet ist und wobei die Arme (11) entweder separat oder im Tandembetrieb angetrieben werden.

## Revendications

1. Dispositif pour la préhension et le transfert de cassettes (2) entre des positions de stockage et de délivrance, comprenant un châssis mobile (1) ayant des rebords avant et arrière, ledit châssis mobile étant associé à des moyens latéraux (11), mobiles par rapport audit châssis, lesdits moyens (11) portant une courroie (12) et consistant en des bras longitudinaux perpendiculaires au rebord avant du châssis (1) et mobiles l'un par rapport à l'autre pour venir en prise avec les parois latérales d'une cassette (2) pour la saisir et la transférer, chaque moyen (11) dépassant dudit châssis (1), **caractérisé en ce que** les moyens (11) s'étendent jusqu'à la partie centrale dudit châssis (1) pour transférer une cassette par le rebord avant et/ou arrière du châssis (1) ayant une taille légèrement supérieure à celle des cassettes (2).

2. Dispositif selon la revendication 1, **caractérisé en ce que** lesdits bras (11) sont parallèles entre eux et portent des rangées de roulettes identiques (10).

3. Dispositif selon l'une quelconque des revendications précédentes, **caractérisé en ce que** lesdits bras (11) sont montés sur des supports (3, 5) mobiles par rapport au châssis (1), lesdits supports portant des crémaillères (40, 42) en prise avec un engrenage (34), dont la rotation écarte ou rapproche les supports (3, 5)l'un de l'autre.

4. Dispositif selon l'une quelconque des revendications précédentes, **caractérisé en ce que** chaque bras (11) porte au moins une roulette (10) entraînée par un moteur (30) associé à une poulie (32, 22, 16 ; 24, 17) et des engrenages (26, 28) montés sur un bras pivotant (29) pour rester en prise lorsque les bras (11) se déplacent l'un par rapport à l'autre.

5. Dispositif selon l'une quelconque des revendications précédentes, **caractérisé en ce qu'**il inclut deux paires de bras (11), une paire située sur le rebord avant, l'autre sur le rebord arrière, lesdits bras (11) étant actionnés soit séparément, soit en tandem.
